# EUROPEAN PATENT APPLICATION

(11) **EP 1 070 652 A2**
(43) Date of publication of application: **24.01.2001**
(21) Application number: 00202250.7
(22) Date of filing: 27.06.2000
(51) Int. Cl.: B62D 1/184

(54) **Clamping device for a steering column**

(30) Priority: 19.07.1999 GB 9916921
(71) Applicant: Delphi Technologies, Inc., Troy, MI 48007 (US)
(72) Inventor: Thomas, Stéphane, 92120 Montrouge (FR); Thevenin, Francois, 92100 Boulogne Billancourt (FR); Alla, Tayeb, 93150 Le Blanc Mesnil (FR)
(74) Representative: Denton, Michael John

(57) **Abstract**

A clamping device (10) for the steering column of a motor vehicle comprising a first bracket (12) having a pair of spaced arms (24), each arm having an elongate aperture (28); a second bracket (14) having a pair of spaced arms (18), each arm having an elongate aperture (22); each arm of the first bracket being positioned adjacent one of the arms of the second bracket; and a clamping mechanism (30) including a bolt member (78) having an enlarged head (84) and a threaded shank (82) extending through the apertures in the arms of the first and second brackets; a nut (80) threaded on the shank; a pivotable member (42,44) having a cam surface (52) mounted on the shank; a cam follower (46) rotatably mounted on the shank and having a cam surface (48) in engagement with the cam surface on the pivotable member, the pivotable member being rotatable relative to the cam follower between a clamped position of the clamping mechanism in which the arms of the bracket frictionally engage, and a release position in which the arms are frictionally disengaged; the clamping mechanism further including a substantially rectangular aperture (34) on one of the arms of one of the brackets aligned with the aperture in the arm; a substantially rectangular insert (50) positioned in the rectangular aperture and having a shaped aperture (58); and an eccentric cam (60) secured to the shank and positioned in the shaped aperture; the rectangular aperture and the insert having corresponding teeth (36,56) formed in adjacent edges (38,57), the eccentric cam acting on the insert to cause the teeth to interengage in the clamped position and to disengage in the release position. Provides increased adjustment clamping holding force in the clamped position.

## Description

### Technical Field

The present invention relates to a clamping device for the steering column of a motor vehicle, and in particular to a clamping device which allows the steering column to rake and telescope relative to the vehicle body.

### Background of the Invention

It is known to provide a clamping device for a steering column which allows the steering column to rake and telescope relative to the vehicle body. The clamping device generally comprises a first bracket which is secured to the vehicle body, and a second bracket which is secured to the steering column. The first and second brackets are secured together by a clamping mechanism including a bolt and a nut, with the bolt passing through aligned apertures in the first and second brackets. The apertures in the first bracket are shaped to allow the steering column to have a rake movement (height adjustment or tilt) when the clamping mechanism is loose. The apertures in the second bracket are shaped to allow the steering column to telescope (move in an axial direction) when the clamping mechanism is loose.

### Summary of the Invention

The object of the present invention is to provide an improvement to this previously known arrangement.

A clamping device in accordance with the present invention for the steering column of a motor vehicle, comprises a first bracket securable to the vehicle, the first bracket having a pair of spaced arms, each arm having an elongate aperture, the apertures being substantially aligned; a second bracket securable to the steering column, the second bracket having a pair of spaced arms, each arm having an elongate aperture, the apertures being substantially aligned; each arm of the first bracket being positioned adjacent one of the arms of the second bracket, with the apertures in the arms of the first bracket being at an angle to the apertures in the arms of the second bracket; and a clamping mechanism including a bolt member having an enlarged head and a threaded shank extending through the apertures in the arms of the first and second brackets; a nut threaded on the shank; a pivotable member having a cam surface mounted on the shank; a cam follower rotatably mounted on the shank and having a cam surface in engagement with the cam surface on the pivotable member, the pivotable member being rotatable relative to the cam follower between a clamped position of the clamping mechanism in which the arms of the bracket frictionally engage, and a release position in which the arms are frictionally disengaged; the clamping mechanism further including a substantially rectangular aperture on one of the arms of one of the brackets aligned with the aperture in the arm; a substantially rectangular insert positioned in the rectangular aperture and having a shaped aperture; and an eccentric cam secured to the shank and positioned in the shaped aperture; the rectangular aperture and the insert having corresponding teeth formed in adjacent edges, the eccentric cam acting on the insert to cause the teeth to interengage in the clamped position and to disengage in the release position.

The present invention provides a clamping device in which the holding load of the clamping mechanism is increased simply and cheaply.

### Brief Description of the Drawings

The present invention will now be described, by way of example, with reference to the accompanying drawings, in which:-
Figure 1 is an exploded view of a clamping device in accordance with the present invention;
Figures 2 is a cross-sectional view of the clamping device of Figure 1;
Figure 3 is a perspective view of the clamping mechanism of the clamping device of Figure 1 in the clamped position;
Figure 4 is a side view of the clamping mechanism of Figure 3 in the clamped position;
Figure 5 is a side view of the clamping mechanism of Figure 3 in the released position; and
Figure 6 is an exploded view of a second embodiment of a clamping device in accordance with the present invention.

### Description of the Preferred Embodiment

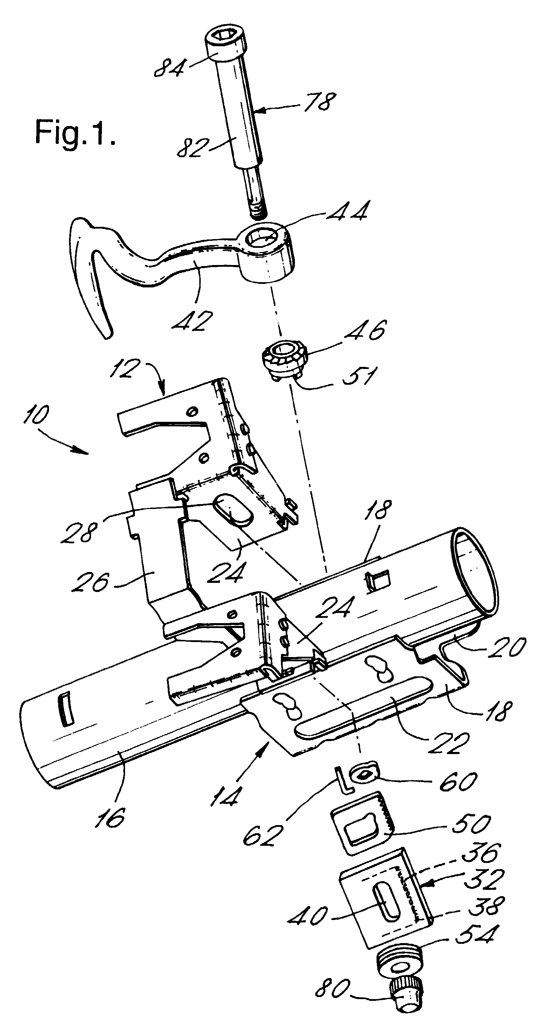

Referring to Figures 1 to 5 of the drawings, the clamping device 10 of the present invention is for use with a steering column (not shown) of a motor vehicle. The clamping device 10 is such as to allow the steering column to rake and/or telescope relative to the vehicle body (not shown) on which the column is mounted.

The clamping device 10 comprises a first bracket 12 which, in use, is secured to the vehicle body in any suitable arrangement; and a second bracket 14 which is secured (in any suitable manner) to a portion of the steering column, typically by way of a tubular jacket 16.

The second bracket 14 includes a pair of spaced arms 18 which are normally positioned on either side of the steering column and are preferably connected by a bridge member 20. Each arm 18 of the second bracket 14 has an elongate aperture 22 formed therein which extends in a direction substantially parallel to the axis A of the steering column. The apertures 22 in each arm 18 are substantially aligned.

The first bracket 12 includes a pair of spaced arms 24, each of which is positioned adjacent one of the arms 18 of the second bracket 14. The arms 24 of the first bracket 12 are preferably connected by a bridge member 26. Each arm 24 of the first bracket 12 has an elongate aperture 28 formed therein which extends in a direction at an angle to, and substantially perpendicular to, the aperture 22 in the adjacent arm 18 of the second bracket 14. The apertures 28 in the arms 24 are substantially aligned.

A clamping mechanism 30 is used to releasably clamp the first and second brackets 12,14. The clamping mechanism 30 comprises a toothed plate 32 which is secured on one of the arms 24 of the first bracket 12. The toothed plate 32 comprises a substantially rectangular aperture 34 having teeth 36 formed in one edge 38 of the aperture. The toothed plate 32 also has an aperture 40 therethrough which either defines, or aligns with and is substantially identical to, the aperture 28 in the arm 24 on which the toothed plate is mounted. A substantially rectangular insert 50 is positioned inside the rectangular aperture 34 and is sized to allow movement of the insert relative to the toothed plate 32 in any direction. The insert 50 has teeth 56 formed in one edge 57 which correspond with and are engageable with the teeth 36 of the toothed plate 32. The insert 50 also has a shaped aperture 58 within which an eccentric cam 60 is rotatably mounted. A spring 62 is mounted in the shaped aperture 58 and acts on the eccentric cam 60 to normally bias the teeth 56 on the insert 50 away from the teeth 36 in the toothed plate 32.

The clamping mechanism 30 further comprises a lever 42 which can pivot about an axis B which extends through the apertures 28, 22 in the arms 24, 18 of the first and second brackets 12, 14; the apertures 34, 40 in the toothed plate 32; and the aperture 58 in the insert 50. The lever 42 is secured to a cam 44 which is rotatable about the pivot axis B. A cam follower 46 is positioned next to the cam 44. The cam follower 46 has guide pegs 51 which extend into (and slide in) the aperture 28 in the adjacent arm 24, and which substantially prevent rotation of the cam follower about the pivot axis B. The cam follower 46 has a cam surface 48 adjacent a corresponding cam surface 52 on the cam 44. The cam surfaces 48, 52 are in substantially continuous engagement.

The clamping mechanism 30 is secured together and in place on the brackets 12, 14 by a bolt 78 and nut 80. The bolt 78 has a shank 82 which extends along the pivot axis B through the cam 44, the cam follower 46, the apertures 22, 28 in the brackets 12,14, the apertures 34, 40 in the toothed plate 32, and the aperture 58 in the insert 50. The bolt 78 has an enlarged head 84 at one end of the shank 82, and the nut 80 is threaded on the other end of the shank. The head 84 of the bolt 78 engages the lever 42. The eccentric cam 60 is secured to, and rotates with, the shank 82 of the bolt 78 about the pivot axis B. The thrust washer 54 is positioned between, and engages, the nut 80 and the toothed plate 32 (or the adjacent arm 24 of the first bracket 12 on which the toothed plate is secured) to bias the cam surfaces 48,52 into substantially continuous engagement.

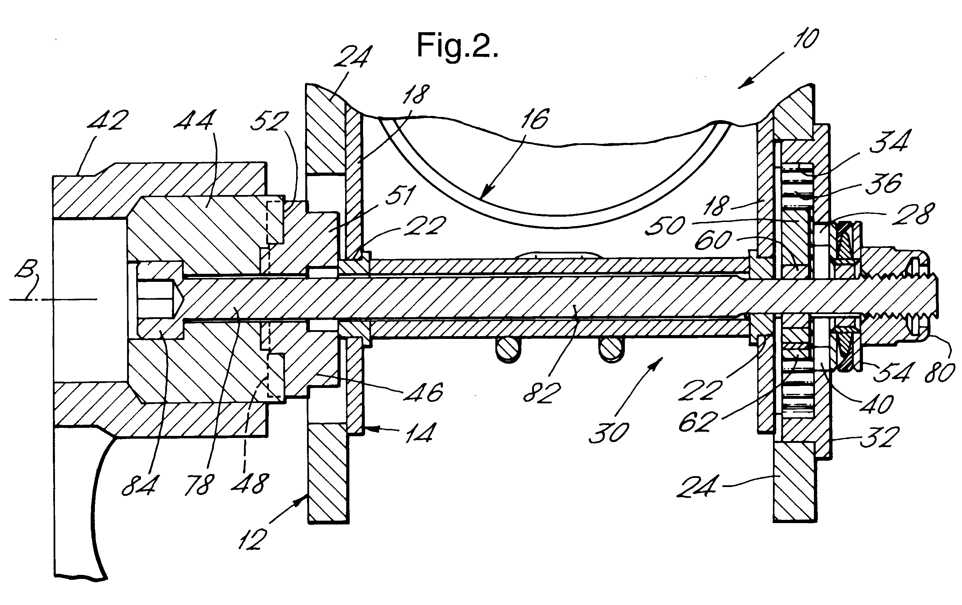

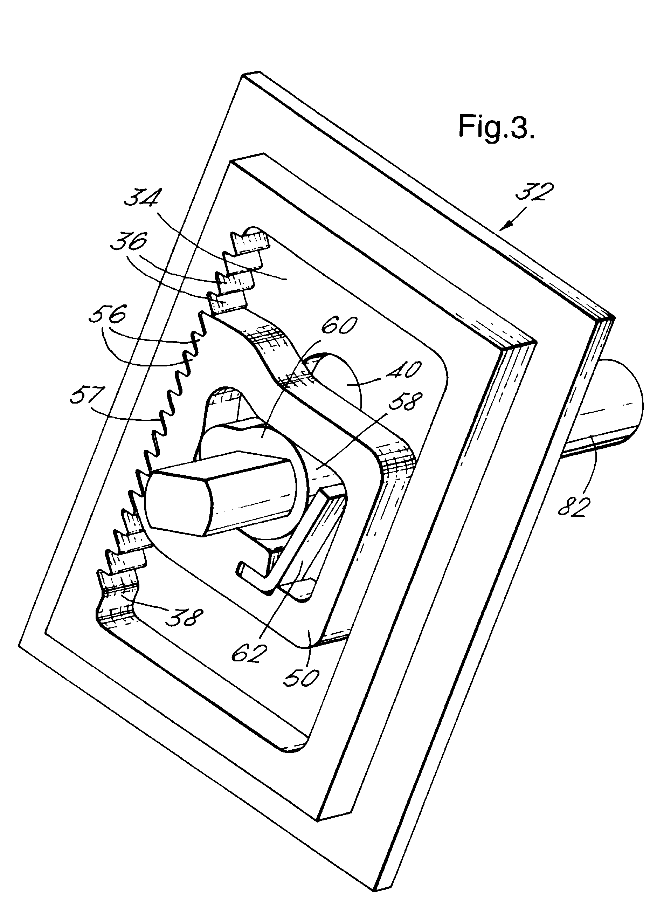

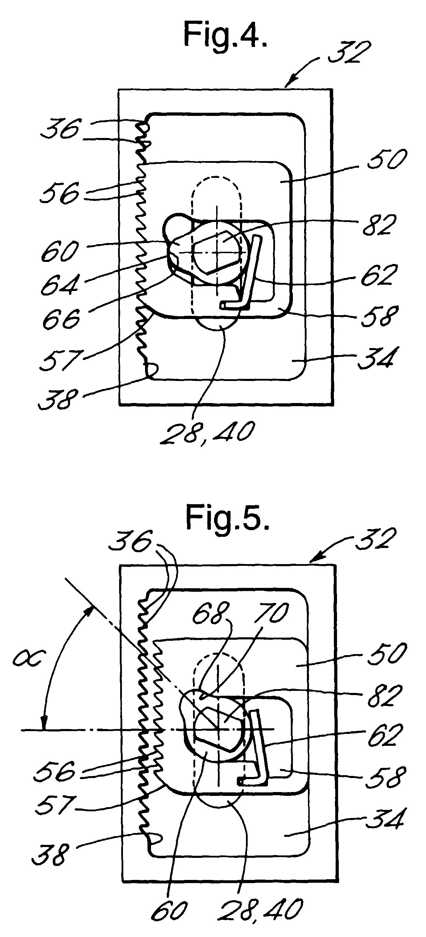

In the clamped position of the clamping mechanism 30, as shown in Figure 2, the adjacent arms 24, 18 of the first and second brackets 12, 14 frictionally engage one another to secure the first bracket 12 relative to the second bracket 14. Additionally, (as shown in Figures 3 and 4), the teeth 56 on the insert 50 interengage with the teeth 36 on the toothed plate 32 to increase the clamping or holding load, with a first surface 64 of the eccentric cam 60 in engagement with a first edge 66 of the shaped aperture 58 to lock the teeth together.

In order to move the clamping mechanism 30 to a released position, the lever 42 is rotated in a first direction about the pivot axis B. Such rotation of the lever 42 rotates the cam surface 52 on the cam 44, about the pivot axis B, relative to the cam surface 48 on the cam follower 46. As the cam surfaces 48,52 rotate relative to one another, the cam 44 moves axially along the pivot axis B towards the nut 80 to release the frictional engagement between the adjacent arms 24, 18 of the first and second brackets 12, 14. Additionally, the rotation of the lever 42 causes the shank 82 of the bolt 78 to rotate about the pivot axis B, thereby causing the eccentric cam 60 to rotate about the pivot axis relative to the insert 50. The movement of the eccentric cam 60 is such that the first surface 64 of the eccentric cam becomes disengaged from the first edge 66 of the shaped aperture 58, and a second surface 68 of the eccentric cam becomes engaged with a second edge 70 of the shaped aperture. The engagement of the second surface 68 with the second edge 70 moves the insert 50 relative to the toothed plate 32 (due to the bias of the spring 62) to disengage the teeth 36, 56 (Figure 5). In the released position of the clamping mechanism 30, the second bracket 14 is capable of telescopic and/or rake movement relative to the first bracket 12.

In order to move the clamping mechanism 30 back to the clamping position, the lever 42 is rotated in the opposite direction to the first direction about the pivot axis B. Such action has the reverse effect to that described above during release, and the cam 44 moves away from the nut 80 to bring the arms 24, 18 back into frictional engagement, and the teeth 36, 56 move back into engagement with one another.

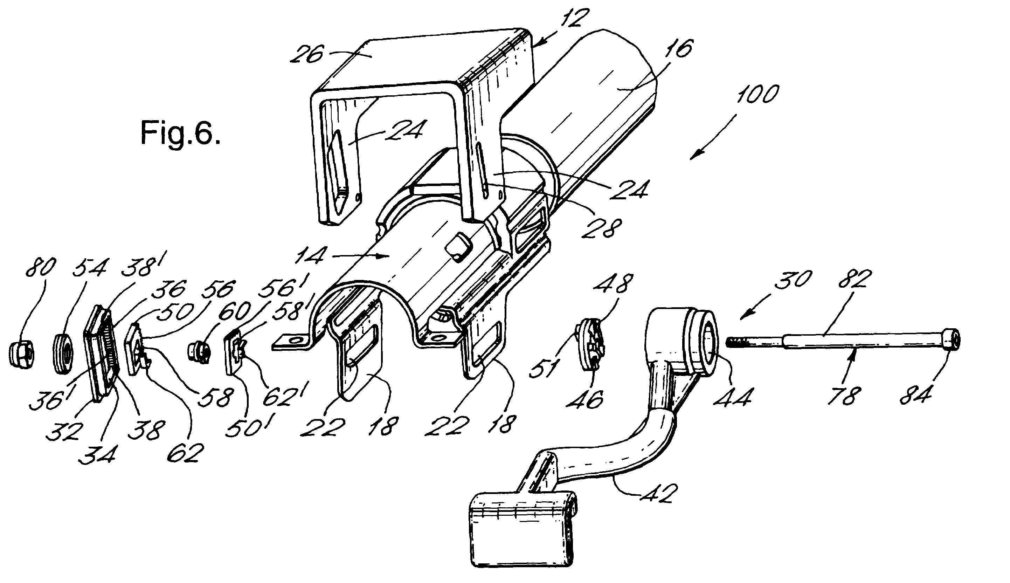

In the second embodiment of clamping device 100 shown in Figure 6, like parts have been given the same reference numeral as in Figures 1 to 5. In the second embodiment, the rectangular aperture 34 of the toothed plate 32 has teeth 36,36' formed along two adjacent edges 38,38'. A second insert 50' is positioned in the rectangular aperture 34 of the toothed plate 32 axially adjacent the first insert 50. The second insert 50' has a substantially identical shape to the first insert 50, with a spring 62' positioned in the shaped aperture 58' of the second insert. The second insert 50' has teeth 56' which are engageable with the teeth 36' of the toothed plate 32. The eccentric cam 60 extends into the shaped aperture 58,58' of both the first insert 50 and the second insert 50', and acts on the inserts in the same manner, and in the manner described above in respect of Figures 1 to 5. Alternatively, a second eccentric cam may be positioned in the shaped aperture 58' of the second insert 50'. In the clamped position of the clamping mechanism 30, the teeth 56 on the first insert 50 engage the teeth 36 of the toothed plate 32, and the teeth 56' of the second insert 50' engage the teeth 36' of the toothed plate. In the released position of the clamping member 30, the teeth 56,56'; 36,36' are disengaged.

The present invention provides a clamping device with a clamping mechanism which is simple and easy to assemble, which is capable of providing an increase in clamping force over previously known arrangements, and which can easily be added to current designs having a friction grip between the arms of the brackets. In the arrangement of Figures 1 to 5, the increase in clamping load is either in the telescope direction or in the rake direction dependent on the position of the teeth 36,56 relative to the first and second brackets 12,14. In the arrangement of Figure 6, the increase in clamping load is in both the telescope direction and the rake direction.

To reduce the risk of peak-to-peak engagement of the teeth during clamping, the teeth are preferably at an angle α (Figure 5) to the respective edges of the rectangular aperture and the insert, the angle α preferably being substantially the same as the angle through which the eccentric cam rotates between the clamped and released positions. In the above described embodiments, the toothed plate 32 is separately formed and secured to the arm 24 of the first bracket 12, with the aperture 40 in the toothed plate defining the elongate aperture 28 in the arm. Alternatively, the toothed plate may be separately formed and secured on the outer surface of the arm of the first bracket, in which case the elongate aperture in the arm and the aperture in the toothed plate will be separately formed. In a further alternative, the toothed plate 32 may be integrally formed with the arm 24 of the first bracket 12. A similar toothed plate, insert, and eccentric cam may be associated with the other arm of the first bracket, or with one or both arms of the second bracket. The holding clamping force can be altered by changing the profile and/or the dimensions of the teeth on the toothed plate and the teeth on the insert, and/or the profile of the eccentric cam.

## Claims

1. A clamping device for the steering column of a motor vehicle comprising a first bracket securable to the vehicle, the first bracket having a pair of spaced arms, each arm having an elongate aperture, the apertures being substantially aligned; a second bracket securable to the steering column, the second bracket having a pair of spaced arms, each arm having an elongate aperture, the apertures being substantially aligned; each arm of the first bracket being positioned adjacent one of the arms of the second bracket, with the apertures in the arms of the first bracket being at an angle to the apertures in the arms of the second bracket; and a clamping mechanism including a bolt member having an enlarged head and a threaded shank extending through the apertures in the arms of the first and second brackets; a nut threaded on the shank; a pivotable member having a cam surface mounted on the shank; a cam follower rotatably mounted on the shank and having a cam surface in engagement with the cam surface on the pivotable member, the pivotable member being rotatable relative to the cam follower between a clamped position of the clamping mechanism in which the arms of the bracket frictionally engage, and a release position in which the arms are frictionally disengaged; the clamping mechanism further including a substantially rectangular aperture on one of the arms of one of the brackets aligned with the aperture in the arm; a substantially rectangular insert positioned in the rectangular aperture and having a shaped aperture; and an eccentric cam secured to the shank and positioned in the shaped aperture; the rectangular aperture and the insert having corresponding teeth formed in adjacent edges, the eccentric cam acting on the insert to cause the teeth to interengage in the clamped position and to disengage in the release position.

2. A clamping device as claimed in Claim 1, wherein a first surface on the eccentric cam engages a first edge of the shaped aperture in the clamped position and a second surface of the eccentric cam engages a second edge of the shaped aperture in the release position.

3. A clamping device as claimed in Claim 1 or Claim 2, wherein a spring is positioned in the shaped aperture and acts on the eccentric cam to normally bias the teeth away from one another.

4. A clamping device as claimed in any one of Claims 1 to 3, further comprising a second substantially rectangular insert positioned in the rectangular aperture and having a shaped aperture; and a second eccentric cam secured to the shank and positioned in the shaped aperture of the second insert; the rectangular aperture and the second insert having corresponding teeth formed in adjacent edges, the second eccentric cam acting on the second insert to cause the teeth to interengage in the clamped position and to disengage in the release position.

5. A clamping device as claimed in Claim 4, wherein a first surface on the second eccentric cam engages a first edge of the shaped aperture of the second insert in the clamped position and a second surface of the second eccentric cam engages a second edge of the shaped aperture in the second insert in the release position.

6. A clamping device as claimed in Claim 4 or Claim 5, wherein a spring is positioned in the shaped aperture of the second insert and acts on the second eccentric cam to normally bias the teeth away from one another.

7. A clamping device as claimed in any one of Claims 4 to 6, wherein the first and second eccentric cams are integrally formed in one piece.

8. A clamping device as claimed in any one of Claims 1 to 7, wherein the rectangular aperture is formed in a separately formed plate member which is secured to said one of the arms of one of the brackets, the plate member having an aperture corresponding to the elongate aperture in said one arm.

9. A clamping device as claimed in Claim 8, wherein the aperture in the plate member defines the elongate aperture in said one of the arms of one of the brackets.

10. A clamping device as claimed in any one of Claims 1 to 7, wherein the rectangular aperture is integrally formed in said one of the arms of one of the brackets.

11. A clamping device as claimed in any one of Claims 1 to 10, wherein the teeth extend at an angle to the edges in which the teeth are formed.

12. A clamping device as claimed in Claim 11, wherein the angle of the teeth is substantially the same as the angle through which the or each eccentric cam rotates between the clamped position and the release position.

13. A clamping device as claimed in any one of Claims 1 to 12, wherein the pivotable member comprises a lever and a cam, the cam having the cam surface engaged with the cam follower.
